## Europäisches Patentamt
## European Patent Office
## Office européen des brevets

(19)

(11) Veröffentlichungsnummer: **0 092 026**
**B1**

(12) **EUROPÄISCHE PATENTSCHRIFT**

(45) Veröffentlichungstag der Patentschrift:
**15.10.86**

(51) Int. Cl.⁴: **F 16 L 57/00**

(21) Anmeldenummer: **83101005.3**

(22) Anmeldetag: **21.03.83**

(54) **Metallrohr mit Schutzüberzug und integriertem Steinschutz.**

(30) Priorität: **19.04.82 DE 3214319**

(43) Veröffentlichungstag der Anmeldung:
**26.10.83 Patentblatt 83/43**

(45) Bekanntmachung des Hinweises auf die Patenterteilung:
**15.10.86 Patentblatt 86/42**

(84) Benannte Vertragsstaaten:
**AT BE CH DE FR GB IT LI LU NL SE**

(56) Entgegenhaltungen:
**DE-A-2 040 604**
**DE-A-2 200 606**
**DE-A-2 324 836**
**DE-A-2 345 646**
**DE-A-2 540 748**
**DE-A-2 614 793**
**DE-B-2 335 802**
**DE-C-730 579**
**FR-A-2 458 736**

(73) Patentinhaber: **Hoesch Aktiengesellschaft, Eberhardstrasse 12, D-4600 Dortmund 1 (DE)**

(72) Erfinder: **Wandel, Lothar, Dipl.- Ing., Josef-Gockeln- Strasse 17, D-4700 Hamm 1 (DE)**

## Beschreibung

Die Erfindung betrifft ein Metallrohr mit Korrosions- und Steinschutzüberzug nach dem Oberbegriff des Anspruches 1.

Es ist bekannt, Metallrohre mit einem Korrosionsschutzüberzug und einem zusätzlichen Schutzüberzug gegen mechanische Beschädigungen - sogenannten Steinschutz - zu versehen (DE-B-2 335 802, insbesondere Figur 3; DE-A-2 040 604, insbesondere Figur 3 und Figur 4), wobei gem. der genannten Figuren der äußere Schutzüberzug gerippt sein kann.

Dieser Schutzüberzug hat Nachteile insofern, als zu seiner Herstellung mindestens 2 kostspielige Extrusionsanlagen benötigt werden und außerdem für das Nachisolieren der Rohrverbindungsbereiche das Einfügen eines Trennmittels zwischen den beiden Kunststoffschichten erforderlich ist.

Zum Stand dieser Technik mit getrennten Korrosions- und Steinschutzüberzügen sind eine Vielzahl weiterer Vorschläge bekannt (DE-A-2 345 646, DE-A-2 540 748), die für die Herstellung des Schutzüberzuges eine verhältnismäßig große Fertigungszeit und Wärmeeinbringung erfordern.

Bekannt ist des weiteren, Metallrohre nur mit einem einfachen Korrosionsschutzüberzug zu versehen und darüber eine Steinschutzmatte oder ein Steinschutznetz, ähnlich DE-A-2 614 793 zu wickeln. Die Praxis hat jedoch gezeigt, daß derartige Netze relativ teuer sind und den Verlegefortschritt durch die zusätzliche Wickelarbeit behindern.

Alle bekannten Vorschläge haben mit der vorliegenden Erfindung die Zielvorstellung gemein, die mechanische Beschädigung des Korrosionsschutzes während des Transportes oder der Verlegung zu verhindern und eine Rohrbettung in feinkörnigem Sand überflüssig zu machen bzw. auf ein Mindestmaß zu verringern.

Aus der DE-A-2 200 606 ist noch ein mit Kunststoff ummanteltes Metallrohr für erhöhte Außendruckbeanspruchung bekannt, das im Kunststoffmantel längsgerichtete abgeschlossene Hohlräume aufweist, aber keine freien Rippen und somit dem verbleibenen Anmeldungsgegenstand nicht näher kommt, als der aus der DE-A-2 040 604 oder DE-B-2 335 802 bekannte Gegenstand.

Ausgehend von der DE-A- 2040 604 liegt der Erfindung die Aufgabe zugrunde, ein Metallrohr mit einem Korrosion und mechanische Beschädigung verhindernden Schutzüberzug zu versehen, der einfach und mit geringem maschinellen Aufwand bei geringstmöglichem Materialverbrauch auf das Metallrohr gebracht werden kann, aber trotzdem die gleiche Schutzwirkung wie die bekannten Verfahren aufweist.

Diese Aufgabe wird erfindungsgemäß durch die Merkmale in dem Kennzeichenteil des Anspruchs 1.

Vorteilhafte Ausgestaltungen der Erfindung sind in den Ansprüchen 2 bis 4 erfaßt.

Der Schutzüberzug für das erfindungsgemäße Metallrohr kann mit einem einzigen Extruder hergestellt werden. Dadurch wird das Herstellverfahren entscheidend vereinfacht. Das Profil, geneigt gegen die Rohroberfläche, absorbiert alle Stöße, Schläge oder Druckbeanspruchungen durch Steine, da es sich in Rohrumfangsrichtung nachgiebig verhält. Durch die entsprechende Gestaltung der Profilhöhen legen sich die Profile bei Belastung wie ein zweiter Schutzüberzug über die Korrosionsschutzschicht. Die Wirkung des Schutzes kann gesteigert werden, wenn erfindungsgemäß die Rippen der Profile an ihren Enden in sich Abwinkelungen von der Radialrichtung - also in Rohrumfangsrichtung - aufweisen oder durch diese Abwinkelungen jeweils paarweise zwei benachbürte Rippen der Profile sogar miteinander verbunden sind.

Das erfindungsgemäße Metallrohr hat also einen Schutzüberzug mit integriertem Steinschutz; spart gegenüber dem Stand der Technik aber erhebliche Mengen Kunststoffmaterial und Trennmittel bzw. Zwischenkleber.

Ist für spezielle Anwendungsfälle mit einer linienförmigen Druckbelastung des Schutzüberzuges in Rohrlängsrichtung zu rechnen, kann erfindungsgemäß das Profil an der Rohroberfläche schraubenlinienförmig ausgebildet werden.

An den Rohrenden kann das Profil eingeebnet werden, z. B. mit einem Bügeleisen, so daß eine handelsübliche Nachisolierung mit Wickelbinden oder Schraumpfschläuchen möglich ist. Dies ist sinnvoll, da sonst ein Eindringen korrosiver Medien längs der Profile möglich wäre.

Der Extrusionskopf für die Herstellung des profilierten Schutzüberzuges kann mit einem auswechselbaren Profilwerkzeug, bei einem Schlauchextruder ist dies z. B. ein Profilring, ausgestattet werden. Dies ermöglicht einen schnellen Profilvariantenwechsel und hat geringe Werkzeugkosten zur Folge.

Für die Herstellung eines schraubenlinienförmigen Profiles mit einem Schlauchextruder wird der Profilring mit einem Drehantrieb versehen, der während der Schlauchextrusion den Profilring kontinuierlich langsam dreht, so daß das gewünschte Profil entsteht.

Im folgenden wird die Erfindung anhand einiger schematischer Zeichnungen näher erläutert. Es zeigt

Fig. 1 einen Abschnitt eines Metallrohres mit Schutzüberzug

Fig. 2 einen Abschnitt einer anderen Ausführungsform eines Metallrohres mit Schutzüberzug,

Fig. 3 einen Abschnitt einer weiteren Ausführungsform eines Metallrohres mit Schutzüberzug,

Fig. 4 einen Abschnitt einer weiteren Ausführungsform eines Metallrohres mit Schutzüberzug.

Ein Metallrohr, hier Stahlrohr 1, dessen Oberfläche entzundert und gereinigt wurde, wird im Durchlaufverfahren auf ca. 180 °C erwärmt und mit einem Haftvermittler 4 versehen. In einem nicht dargestellten Extruder mit Extruderkopf wird das Stahlrohr 1 im Durchlauf mit einem am Extruderauslaß erzeugten Polyäthylenschlauch als einstückigen Schutzüberzug 2 umhüllt. In den Extruderkopf ist ein auswechselbarer Profilring eingesetzt, dessen Profilmatern auf dem einstückigen Schutzüberzug 2 während der Schlauchextrusion ein Profil 3 erzeugt.

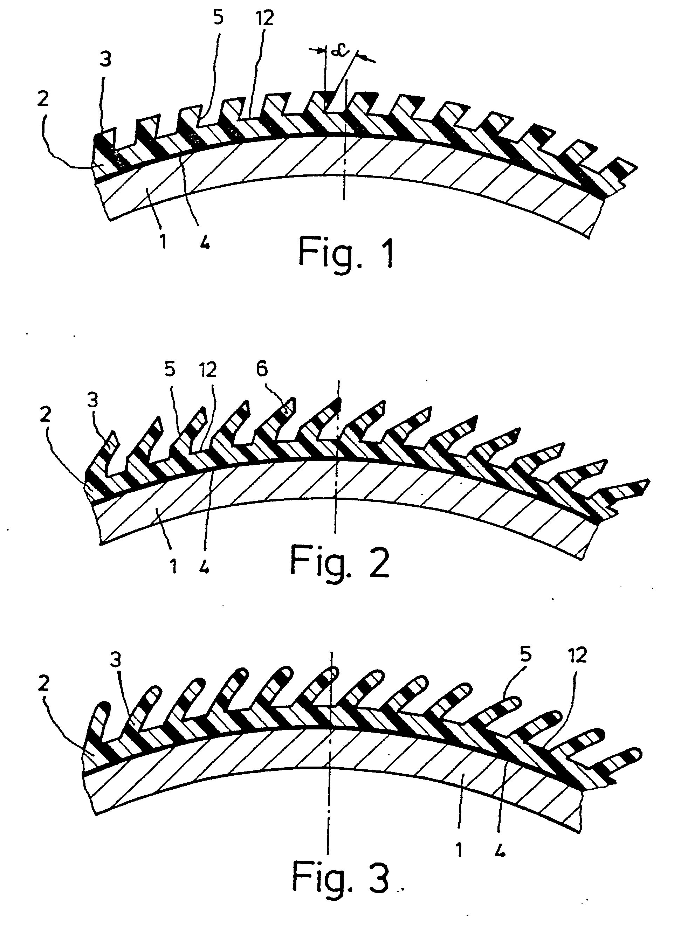

Wie aus der Fig. 1 hervorgeht, sind die Profilflanken 5 bzw. Rippen des Profiles 3 derart schlank ausgebildet und um den Flankenwinkel α zur Rohrachse einseitig in Rohrumfangsrichtung soweit geneigt, daß sich bei äußerer Druckbelastung das Profil 3 wegen der Neigung der Profilflanken 5 bzw. Rippen in Rohrumfangsrichtung neigen wird, bis die profilzwischenräume 12 überdeckt sind. Die Höhe des profiles 3 ist daher größer als die Breite der profilzwischenräume 12 gestaltet.

Fig. 2 zeigt ein Ausführungsbeispiel, bei die Rippen des Profiles 3 in sich in Richtung ihrer Neigung abgewinkelt 6 sind, damit der Schutzüberzug 2 bei Belastung noch elastischer reagiert.

Wie die Fig. 3 zeigt, können die Rippen des Profiles 3 auch in sich in Richtung ihrer Neigung sein, wodurch die gleiche Wirkung erzielt wird.

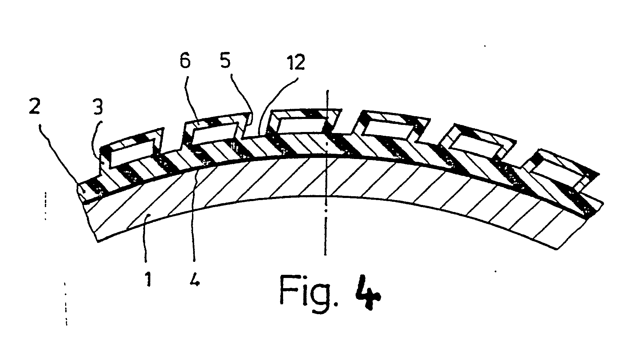

Wenn die Rippen des Profiles 3 gemäß Fig. 4 derart abgewinkelt 6 sind, daß jewils paarweise zwei benachbarte Rippen des Profiles 3 moteinander verbunden sind, ergibt sich ein verstärkter Schutz gegen Druckbeanspruchung.

An den nicht dargestellten Enden des Stahlrohres kann das Profil 3 mot einem Bügeleisen so eingeebnet werden, daß nur ein glatter Schutzüberzug 2 an den Enden verbleibt, damit beim Nachisoloeren der Rohrverbindungsstäße keine Feuchtigkeit längs der Profile 3 unter den Schutzüberzug 2 dringen kann.

## Patentansprüche

1. Metallrohr (1) mit Korrosions- und Steinschutzüberzug (2) aus Kunststoff, der im Bereich der äußeren Oberfläche ein längsgerichtetes Profil (3) aufweist, dadurch gekennzeichnet, daß der Schutzüberzug (2) einstückig und die Rippen des Profiles (3) derart schlank ausgebildet und einseitig in Rohrumfangsrichtung soweit geneigt sind, daß die Rippen bei Belastung die Profilzwischenräume (12) überdecken.

2. Metallrohr nach Anspruch 1, dadurch gekennzeichnet, daß die Rippen des Profiles (3) in sich in Richtung ihrer Neigung abgewinkelt oder gebogen sind.

3. Metallrohr nach den Ansprüchen 1 und 2, dadurch gekennzeichnet, daß jeweils paarweise zwei benachbarte Rippen des profiles (3) verbunden sind.

4. Metallrohr nach einem oder mehreren der vorhergehenden Ansprüche, dadurch gekennzeichnet, daß das Profil (3) in Längsrichtung des Metallrohres (1) schraubenlinienförmig ausgebildet ist.

## Claims]

1. Metal tubing (1) with coating (2) of plastics material protecting the tubing against corrosion and stones, the coating having a lengthwise extending profile (3) in the region of its outer surface, characterised in that the protective coating (2) is formed in one piece and the ribs of the profile (3) are slim and are inclined to one side in the circumferential direction of the tubing such that the ribs, when put under load, cover over the intermediate gaps (12) of the profile.

2. Metal tubing according to claim 1, characterised in that the ribs of the profile (3) are angled or bent in the direction of their inclination.

3. Metal tubing according to claims 1 and 2, characterised in that every two adjacent ribs of the profile (3) are connected together in pairs.

4. Metal tubing according to one or more of the preceding claims, characterised in that the profile (3) follows a helical course in the lengthwise direction of the metal tubing (1).

## Revendications

1. Tube métallique (1) comportant un revêtement (2) en matière synthétique assurant une protection contre la corrosion et les détériorations mécaniques, revêtement qui comporte une sculpture dirigée dans le sens longitudinal, caractérisé en ce que le revêtement de protection (2) est réalisé d'une pièce, tandis que les nervures de la sculpture (3) sont allongées et inclinées d'un côté, dans les sens périphérique du tube, de façon à recouvrir les espaces intermédiaires (12) de la sculpture, en charge.

2. Tube métallique suivant la revendication caractérisé en ce que les nervures de la sculpture sont coudées ou pliées dans la direction de leur inclinaison.

3. Tube métallique suivant les revendications 1 et 2, caractérisé en ce que les nervures voisin es de la sculpture (3) sont reliées par paires.

4. Tube métallique suivant une ou plusieurs des revendications précédentes, caractérisé en ce que la sculpture (3) a une configuration hélicoïdale dans le sens longitudinal du tube métallique (1).

Fig. 1

Fig. 2

Fig. 3

Fig. 4